(19) Europäisches Patentamt
European Patent Office
Office européen des brevets

(11) Veröffentlichungsnummer: **0 066 152**
**A1**

(12) # EUROPÄISCHE PATENTANMELDUNG

(21) Anmeldenummer: **82104216.5**

(22) Anmeldetag: **14.05.82**

(51) Int. Cl.$^3$: **C 08 G 75/14**
C 08 K 5/00, C 08 L 81/04

(30) Priorität: **26.05.81 DE 3120993**

(43) Veröffentlichungstag der Anmeldung:
**08.12.82 Patentblatt 82/49**

(84) Benannte Vertragsstaaten:
**BE DE FR GB IT NL**

(71) Anmelder: **BAYER AG**
**Zentralbereich Patente, Marken und Lizenzen**
**D-5090 Leverkusen 1, Bayerwerk(DE)**

(72) Erfinder: **Wellner, Wolfgang, Dr.**
**Hahnenweg 8**
**D-5000 Köln 80(DE)**

(72) Erfinder: **Pedain, Josef, Dr.**
**Haferkamp 6**
**D-5000 Köln 80(DE)**

(72) Erfinder: **Gruber, Hermann, Dr.**
**Paul-Klee-Strasse 87**
**D-5090 Leverkusen(DE)**

(54) **Verwendung von organischen Schwefelverbindungen, Carboxylate und/oder organische Komplexverbindungen von Metallen, sowie organische Basen enthaltenden Katalysatorsystemen für die oxidative Härtung von Mercaptogruppen aufweisenden Kunststoffvorläufern.**

(57) Die Erfindung betrifft die Verwendung von a) Dibenzothiazyldisulfid, b) Carboxylate und/oder organische Komplexverbindungen des Mangangs, Eisens, Nickels oder Kobalts und c) organische Basen, ausgewählt aus der Gruppe bestehend aus gegebenenfalls inerte Substituenten aufweisenden Guanidinen und tertiären Aminen, enthaltenden Katalysatorsystemen als Reaktionsbeschleuniger für die oxidative Härtung von Mercaptogruppen aufweisenden Kunststoffvorläufern.

EP 0 066 152 A1

BAYER AKTIENGESELLSCHAFT 5090 Leverkusen, Bayerwerk

Zentralbereich
Patente, Marken und Lizenzen Wr-by-kl-c

Verwendung von organischen Schwefelverbindungen, Carboxylate und/oder organische Komplexverbindungen von Metallen, sowie organische Basen enthaltenden Katalysatorsystemen für die oxidative Härtung von Mercaptogruppen aufweisenden Kunststoffvorläufern

Die vorliegende Erfindung betrifft ein Katalysator-System für mit Sauerstoff härtbare, organisch gebundene Mercaptogruppen aufweisende Kunststoffvorläufer.

Oligomere und Polymere, die wenigstens zwei Mercaptogruppen enthalten, lassen sich bekanntlich mit Oxidationsmitteln wie $MnO_2$, $PbO_2$, Chromaten oder organischen Peroxiden zu technisch wertvollen, gummiartigen Kunststoffen härten (z.B. DE-OS 2 739 117, DE-OS 2 557 088 oder DE-AS 2 363 856). In der Regel erfolgt die Ausführung der Härtung in Zweikomponentenverfahren, bei denen die Oxidationsmittel kurz vor der Verarbeitung den Polymercaptanen zugemischt werden. Eine direkte Verwendung von Luftsauerstoff als Oxidationsmittel im Sinne von Einkomponentenverfahren ist auf Grund zu geringer Reaktivität normalerweise nicht möglich. Daher gewinnen

Katalysatoren zur beschleunigten oxidativen Härtung von Mercaptogruppen aufweisenden Oligomeren zunehmende Bedeutung. Hierzu vorgeschlagen werden beispielsweise in US-PS 3 991 039 Kombinationen von Thiuramdisulfiden mit Eisen- oder Mangankomplexen als Katalysatoren. In der US-PS 4 224 200 werden Systeme von Dithiocarbamaten mit bestimmten Metallcarbonsäuresalzen oder Komplexen als Katalysatoren empfohlen. Die genannten Katalysatorsysteme des Standes der Technik sind jedoch insbesondere bezüglich der mit ihnen erreichbaren Durchhärtungsgeschwindigkeit noch verbesserungsfähig.

Erfindungsgemäß wurden neuartige Katalysatorsysteme für das genannte Einsatzgebiet aufgefunden, die bezüglich ihrer reaktionsbeschleunigenden Wirkung den Katalysatorsystemen des Standes der Technik überlegen sind. Insbesondere gelingt bei der nachstehend näher beschriebenen erfindungsgemäßen Verwendung der neuartigen Katalysatorsysteme eine raschere Durchhärtung von, Mercaptogruppen aufweisende Kunststoffvorläufer als Bindemittel enthaltenden, Beschichtungsmassen.

Gegenstand der Erfindung ist daher die Verwendung von

a) organische Schwefelverbindungen und

b) Carboxylate und/oder organische Komplexverbindungen des Mangans, Eisens, Nickels oder Kobalts

enthaltenden Katalysatorsystemen als Reaktionsbeschleuniger

für die oxidative Härtung von Mercaptogruppen aufweisenden Kunststoffvorläufern, dadurch gekennzeichnet, daß die Katalysatorsysteme

a) als organische Schwefelverbindung Dibenzothiazyldisulfid der Formel

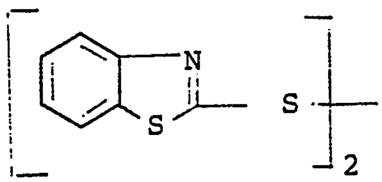

und außerdem

c) organische Basen ausgewählt aus der Gruppe bestehend aus gegebenenfalls inerte Substituenten aufweisenden Guanidinen und tertiären Aminen,

enthalten.

Die Komponente a) der erfindungsgemäß zu verwendenden Katalysatorsysteme besteht aus Dibenzothiazyldisulfid der genannten Formel.

Die Komponente b) der erfindungsgemäß zu verwendenden Katalysatorsysteme besteht aus mindestens einem Carboxylat und/oder mindestens einer organischen Komplexverbindung des Mangans, Eisens, Nickels oder Kobalts. Besonders bevorzugt sind die entsprechenden Verbindungen des zweiwertigen Mangans. Die Natur des Carboxylatanions bzw. des Komplexbildners ist von untergeordneter Bedeutung. Gut geeignet sind beispielsweise die entsprechenden Carboxylate ein- oder zweibasischer aliphatischer, cycloaliphatischer oder aromatischer Carbonsäuren mit ca. 6 bis 18 Kohlenstoffatomen wie z.B. die entsprechenden Hexanoate, Octoate, Laurate, Palmitate, Stearate, Benzoate, Phthalate oder Naphthenate. Besonders gut geeignete organische Komplexbildner sind Enolate wie beispielsweise die entsprechenden Acetylacetonate.

Die Komponente c) der erfindungsgemäß zu verwendenden Katalysatorsysteme besteht aus organischen Basen ausgewählt aus der Gruppe bestehend aus Guanidin und insbesondere inerte Substituenten aufweisenden Guanidinen bzw. tertiären Aminen. Geeignete inerte Substituenten aufweisende Guanidine sind beispielsweise solche Derivate des Guanidins, in denen beide primäre Aminogruppen jeweils durch einen $C_1$-$C_6$-Alkylrest oder jeweils einen Phenylrest substituiert sind wie beispielsweise N,N'-Dimethylguanidin, N,N'-Dihexylguanidin oder N,N'-Diphenylguanidin. Geeignete tertiäre Amine sind insbesondere solche des Molekulargewichtsbereichs 79-300 wie z.B. Pyridin, N,N-Dimethylanilin, Triethylendiamin oder Urotropin. Selbstverständlich können in den erfindungsgemäß zu verwendenden Katalysatorsysteme auch gleichzeitig mehrere derartiger basischer Verbindungen vorliegen.

Im allgemeinen liegen in den erfindungsgemäß zu verwendenden Katalysatorsystemen pro Gewichtsteil der

Komponente a) 0,02 bis 0,5 Gew.-Teile, vorzugsweise 0,05 bis 0,3 Gew.-Teile, der Komponente b) und 0,05 bis 1,0 Gew.-Teile, vorzugsweise 0,1 bis 0,5 Gew.-Teile, der Komponente c) vor. Die zu verwendenden Katalysatorsysteme eignen sich als Reaktionsbeschleuniger für die oxidative Aushärtung von beliebigen, mindestens zwei Mercaptogruppen aufweisenden, vorzugsweise flüssigen Kunststoffvorläufern, wie sie beispielsweise in den obengenannten Literaturstellen oder der DE-OS 1 770 259 beschrieben sind. Die erfindungsgemäß zu verwendenden Katalysatorsysteme werden den oxidativ, d.h. insbesondere durch den Einfluß von Luftsauerstoff zu härtenden Kunststoffvorläufern in Mengen von 0,01 bis 5 Gew.-%, vorzugsweise 0,5 bis 1,5 Gew.-%, bezogen auf Gesamtgewicht der erfindungsgemäßen Katalysatorsysteme einerseits und Gewicht des Kunststoffvorläufers andererseits, zugesetzt. Die Durchmischung der Kunststoffvorläufer mit dem erfindungsgemäß zu verwendenden Katalysator kann dergestalt erfolgen, daß dem Kunststoffvorläufer das vorab hergestellte Gemisch der Einzelkomponenten des Katalysatorsystems zugesetzt wird oder dergestalt, daß dem Kunststoffvorläufer die einzelnen Komponenten des Katalysatorsystems getrennt einverleibt werden oder schließlich dergestalt, daß dem Kunststoffvorläufer das Katalysatorsystem beispielsweise in Form von zwei Einzelkomponenten bestehend aus (i) einem Gemisch aus a) und c) und (ii) der Komponente b) zugemischt werden.

Die die erfindungsgemäßen Katalysatorsysteme enthaltenden Kunststoffvorläufer können selbstverständlich übliche Hilfs- und Zusatzmittel wie z.B. Weichmacher, enthalten.

Die erfindungsgemäße Verwendung eignet sich insbesondere zur Herstellung von, unter dem Einfluß von Luftsauerstoff aushärtbaren, vorzugsweise lösungsmittelfreien Beschichtungsmassen für beliebige Substrate.

Die nachfolgenden Beispiele dienen zur weiteren Erläuterung der erfindungsgemäßen Verwendung.

Beispiel 1

Herstellung eines Mercaptogruppen aufweisenden Oligourethans (Kunststoffvorläufer) gemäß DE-OS 1 770 359.

6000 g eines Polyethers mit dem mittleren Molgewicht 6000, der auf Trimethylolpropan gestartet ist, und dessen Polyalkylen-Polyetherketten zu 78 Mol-% aus Propylenoxideinheiten und zu 22 Mol-% aus Ethylenoxideinheiten bestehen, wird mit 522 g Toluylendiisocyanat (2,4- und 2,6-Isomeres im Verhältnis 80:20) versetzt und unter Stickstoff bei ca. 100°C zu einem NCO-Prepolymer mit einem NCO-Gehalt von 1,8 % umgesetzt. Dann fügt man 222,6 g Mercaptoethanol zu und rührt bei ca. 100°C bis im IR-Spektrum keine NCO-Gruppe mehr zu sehen ist. Man erhält eine klare, viskose Flüssigkeit, die zur weiteren Verarbeitung 80 %ig in Phthalsäurediisodecylphthalt verdünnt wird.

Beispiel 2

Die Wirksamkeit der erfindungsgemäßen Katalysatoren wird in verschiedenen Kombinationen erläutert. Hierzu werden unter Verwendung der nachstehend genannten Zusammensetzungen durch Vermischen und Aufgießen auf Glasplatten unter Aushärten an der Luft bei 23°C Beschichtungen mit einer Schichtdicke von ca. 1 mm hergestellt.

| Zusammensetzung | A | B | C |
|---|---|---|---|
| Produkt aus Beispiel 1 | 50 g | 50 g | 50 g |
| Dibenzothiazyldisulfid und Diphenylguanidin und Urotropin = 70 : 15 : 15 | 1 g | 1 g | 1 g |
| Eisennaphthenat in Lackbenzin (7,5 % Fe) | 1 g | - | - |
| Eisenacetylacetonat 10 %ig in Xylol/Methylenchlorid 1:1 | - | 3 g | - |
| Manganoctoat in Lackbenzin (6 % Mn) | - | - | 1 g |
| Hautbildungszeit an der Luft bei 23°C in Minuten | 200 | 120 | 15 |

Beispiel 3

Dieses Beispiel dient bei ansonsten Beispiel 2 analoger Arbeitsweise zum Vergleich der erfindungsgemäßen Katalysatorzusammensetzung mit denen gemäß US 3 991 039 (Thiuramdisulfide) und US 4 224 200 (Dithiocarbamate).

| Zusammensetzung | I | II | III |
|---|---|---|---|
| Produkt aus Beispiel 1 | 50 g | 50 g | 50 g |
| Manganoctoat in Lackbenzin (6 % Mn-Gehalt) | 1 g | 1 g | 1 g |
| Tetramethylthiuramdisulfid | 1 g | - | - |
| Dibutyldithiocarbamat-Zinksalz | - | 1 g | - |
| Dibenzothiazyldisulfid + Diphenylguanidin + Urotropin = 70 : 15 : 15 | - | - | 1 g |
| Hautbildungszeiten an der Luft bei 23°C in Minuten | 25 | 20 | 15 |

Beispiel 4

Vergleich der Durchhärtungsbeschleunigung der erfindungsgemäßen Katalysatoren im Vergleich zu solchen gemäß US-PS 3 991 039 oder US-PS 4 224 200 am Beispiel von Dichtungsmassen. Hierzu werden die nachstehend genannten Zusammensetzungen in Kartuschen abgefüllt und in Form von ca. 1 cm dicken "Würsten" auf Glasplatten aufgetragen. Nach 5 Tagen wurde ermittelt, wie tief die "Würste" von der Oberfläche nach innen durchgehärtet waren.

| Zusammensetzung | a | b | c |
|---|---|---|---|
| Produkt aus Beispiel 1 | 100 | 100 | 100 |
| Diisodecylphthalat | 100 | 100 | 100 |
| Kreidepulver mit 80 $m^2/g$ Oberfläche | 300 | 300 | 300 |
| Titandioxid | 20 | 20 | 20 |
| Manganoctoat in Lackbenzin (6 % Mn-Gehalt) | 1 | 1 | 1 |
| Tetramethylthiuramdisulfid | 1 | - | - |
| Dibutyldithiocarbamat-Zinksalz | - | 1 | - |
| Dibenzothiazyldisulfid + Diphenylguanidin + Urotropin = 70 : 15 : 15 | - | - | 1 |
| Hautbildungszeit an der Luft bei 23°C in Minuten | 120 | 100 | 90 |
| Durchhärtung nach 5 Tagen in mm | 1 | 0,5 | 3 |

Beispiel 5

Mit diesem Beispiel wird die Wirksamkeit der erfindungsgemäßen Katalysatorzusammensetzung auch für andere Mercaptogruppen aufweisende Kusntstoffvorläufer demonstriert. Hierzu werden entsprechend Beispiel 2 zwei Beschichtungen hergestellt:

A = Polyalkylenpolysulfid mit einem mittleren Molekulargewicht von 4000 und einer Viskosität bei 27°C von 35 - 45 Pa.s ((R)Thiokol LP-32 (Thiokol Chem. Corp.))

B = Poly(oxyalkylen)-polyester-poly(monosulfid)-polythiol hergestellt gemäß US-PS 4 224 200, Kolonne 3, Zeilen 41-51 ((R)PM Polymer der Phillips Petroleum Company) mit 0,85 % Mercaptogruppen und einer Viskosität bei 25°C von 7 Pa.s.

| Zusammensetzung | I | II |
|---|---|---|
| Komponente A | 50 g | - |
| Komponente B | - | 50 g |
| Manganoctoat in Lackbenzin (6 % Mn) | 1 g | 1 g |
| Dibenzothiazyldisulfid + Diphenylguanidin + Urotropin = 70 : 15 : 15 | 0,5 g | 0,5 g |
| Hautbildungszeit an der Luft bei 23°C | 12 Stunden | 20 Minuten |

Patentansprüche

1. Verwendung von

a) organischen Schwefelverbindungen und

b) Carboxylate und/oder organische Komplexverbindungen des Mangans, Eisens, Nickels oder Kobalts

enthaltenden Katalysatorsystemen als Reaktionsbeschleuniger für die oxidative Härtung von Mercaptogruppen aufweisenden Kunststoffvorläufern, dadurch gekennzeichnet, daß die Katalysatorsysteme

a) als organische Schwefelverbindung Dibenzothiazyldisulfid der Formel

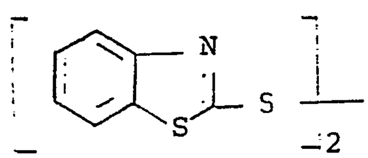

und außerdem

c) organische Basen ausgewählt aus der Gruppe bestehend aus gegebenenfalls inerte Substituenten aufweisenden Guanidinen und tertiären Aminen,

enthalten.

2. Verwendung gemäß Anspruch 1, dadurch gekennzeichnet, daß in den Katalysatorsystemen 0,02 bis 0,5 Gew.-Teile der Komponente b) und 0,05 bis 1,0 Gew.-Teile der Komponente c) pro Gewichtsteil der Komponente a) vorliegen.

3. Verwendung gemäß Anspruch 1 und 2, dadurch gekennzeichnet, daß die einzelnen Katalysatorkomponenten dem oxidativ zu härtenden Kunststoffvorläufer einzeln oder in Form von zwei Einzelkomponenten bestehend aus (i) einem Gemisch aus den Komponenten a) und c) und (ii) der Komponente b) einverleibt werden.

0066152

Europäisches Patentamt

# EUROPÄISCHER RECHERCHENBERICHT

Nummer der Anmeldung

EP 82 10 4216

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 3) |
|---|---|---|---|
| A | FR-A-2 304 641 (THE LONDON HOSPITAL MEDICAL COLLEGE) *Anspruch 1; Seite 4, Beispiel 1* --- | 1 | C 08 G 75/14<br>C 08 K 5/00<br>C 08 L 81/04 |
| A,D | US-A-3 991 039 (E.GUNTER et al.) *Anspruch 1* --- | 1 | |
| A | EP-A-0 006 698 (THIOKOL CORPORATION) *Anspruch 1; Seite 24, Beispiel 13* --- | 1 | |
| A | EP-A-0 012 182 (PHILLIPS PETROLEUM COMPANY) *Anspruch 1* ----- | 1 | |
| | | | RECHERCHIERTE SACHGEBIETE (Int. Cl. 3) |
| | | | C 08 G<br>C 08 K<br>C 08 L |

Der vorliegende Recherchenbericht wurde für alle Patentansprüche erstellt.

| Recherchenort | Abschlußdatum der Recherche | Prüfer |
|---|---|---|
| DEN HAAG | 25-08-1982 | HOFFMANN K.W. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument